# EUROPÄISCHE PATENTSCHRIFT

(11) **EP 3 201 449 B1**
(45) Veröffentlichungstag und Bekanntmachung des Hinweises auf die Patenterteilung: **25.07.2018**
(21) Anmeldenummer: 15760191.5
(22) Anmeldetag: 09.09.2015
(51) Int. Cl.: F02B 29/04

(54) **AUFGELADENE BRENNKRAFTMASCHINE SOWIE FAHRZEUG**
SUPERCHARGED INTERNAL COMBUSTION ENGINE AND VEHICLE
MOTEUR SURALIMENTÉ ET VÉHICULE

(30) Priorität: 01.10.2014 DE 102014219952
(43) Veröffentlichungstag der Anmeldung: 09.08.2017
(73) Patentinhaber: Mahle International GmbH, 70376 Stuttgart (DE)
(72) Erfinder: DINGELSTADT, René, 70374 Stuttgart (DE); NAGEL, Norman, 71640 Ludwigsburg (DE); STRENG, Simon, 70327 Stuttgart (DE); WIESKE, Peter, 70825 Korntal-Münchingen (DE)
(74) Vertreter: BRP Renaud & Partner mbB Rechtsanwälte Patentanwälte Steuerberater
(86) Internationale Anmeldenummer: PCT/EP2015/070555
(87) Internationale Veröffentlichungsnummer: WO 2016/050463

(56) Entgegenhaltungen:
- EP-A1- 2 020 316
- EP-A2- 1 342 893
- DE-A1-102008 028 290
- US-A1- 2003 015 183
- US-B1- 6 796 134

## Beschreibung

Die vorliegende Erfindung betrifft eine aufgeladene Brennkraftmaschine, vorzugsweise in einem Fahrzeug, mit einem Kältekreis und einer Frischluftanlage, sowie ein solches Fahrzeug.

Zum Betreiben einer Brennkraftmaschine sind ein Brennstoff und Luft notwendig, die in wenigstens einem Brennraum der Brennkraftmaschine verbrannt werden. Zur Leistungssteigerung bzw. Bereitstellung höherer Lasten der Brennkraftmaschine ist es bekannt, die Brennkraftmaschine aufzuladen. Hierbei wird in einer Frischluftanlage zum Zuführen von Luft zur Brennkraftmaschine ein Verdichter vorgesehen, der Bestandteil eines Abgasturboladers sein kann. Der Verdichter verdichtet die der Brennkraftmaschine zuzuführende Luft und stellt der Brennkraftmaschine somit Ladeluft zur Verfügung. In Folge thermodynamischer Gesetzmäßigkeiten führt das Aufladen bzw. Verdichten zu einer Erwärmung der Ladeluft, die wiederum zu einer niedrigen Dichte der Luft führt.

Zur Erhöhung der Dichte der Luft bzw. zur Erhöhung eines Luftmassenstroms ist es wünschenswert, die Ladeluft vor dem Zuführen zur Brennkraftmaschine zu kühlen. Zu diesem Zweck ist es bekannt, einen Ladeluftkühlkreis vorzusehen, in dem ein Kühlmittel zirkuliert und der einen Ladeluftkühler zum Kühlen der Ladeluft sowie einen Kühlmittelkühler zum Kühlen des Kühlmittels aufweist. Insbesondere bei höheren Lasten bzw. Leistungen oder Leistungsanforderungen an die Brennkraftmaschine, beispielsweise in einer Beschleunigungsphase eines zugehörigen Fahrzeugs, führt eine möglichst starke Kühlung der Ladeluft zu einer weiteren Verbesserung der Leistung der Brennkraftmaschine sowie zur reduzierten Entstehung von Schadstoffen in den Abgasen der Brennkraftmaschine. Um diese Verbesserungen zu erreichen, ist also eine möglichst starke Kühlung der Ladeluft verlangt.

Zur Realisierung einer weiteren Kühlung der Ladeluft kann ein Kältekreis herangezogen werden. Das Dokument EP 1 342 893 A2 zeigt einen solchen Kältekreis zur Kühlung von Ladeluft. Im Kältekreis zirkuliert ein Kältemittel, das von einem Kältekreiskompressor angetrieben wird und einen Verdampfer zum Verdampfen des Kältemittels und einen Kondensator zum kondensieren des Kältemittels durchströmt. Zur Nutzung der Kälteleistung des Kältekreises ist es grundsächlich möglich, den Verdampfer des Kältekreises fluidisch mit dem Ladeluftkühlkreis zu koppeln.

Hierbei besteht insbesondere die Gefahr der Vermischung des Kältemittels mit der Ladeluft bzw. mit dem Kühlmittel, insbesondere bei Beschädigungen des Kältekreises bzw. des Kühlkreises. Die Vermischung des Kältemittels mit dem Kühlmittel bzw. der Luft kann zu Betriebsstörungen der Brennkraftmaschine und/oder des Kühlsystems führen. Kommt im Kältekreis oder im Ladeluftkühlkreis ein brennbares bzw. entzündbares Kühlmittel bzw. Kältemittel zum Einsatz, so besteht ferner die Gefahr einer Verbrennung bzw. Zündung, die einen erheblichen Sicherheitsnachteil darstellt. Zudem können bei der Vermischung des Kältemittels mit der Ladeluft bzw. dem Kühlmittel Reaktionsprodukte entstehen, die ebenfalls eine Gefahr darstellen.

Die vorliegende Erfindung beschäftigt sich daher mit dem Problem, für eine aufgeladene Brennkraftmaschine, vorzugsweise in einem Fahrzeug eine alternative oder zumindest andere Ausführungsform anzugeben, die sich insbesondere durch eine erhöhte Sicherheit und/oder eine verbesserte Effizienz auszeichnen.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung basiert auf dem Grundgedanken, bei einer Brennkraftmaschine mit einem Kältekreis, in dem ein Kältemittel zirkuliert, und mit einer Frischluftanlage zur Versorgung der Brennkraftmaschine mit Luft, eine wärmeübertragende Kopplung zwischen dem Kältekreis und der Frischluftanlage mit Hilfe eines eigens hierfür vorgesehenen Zwischenkreises zu realisieren, in dem im Vergleich zum im Kältekreis zirkulierenden Kältemittel ein Zwischenmedium zirkuliert. Hierdurch sind der Kältekreis und die Frischluftanlage wärmeübertragend miteinander gekoppelt. Ferner sind die Frischluftanlage und der Kältekreis fluidisch gänzlich separiert. In der Folge wird eine Vermischung des Kältemittels mit Luft, insbesondere Ladeluft, der Frischluftanlage verhindert oder eine entsprechende Gefahr zumindest erheblich reduziert. Somit ist die Sicherheit des Kühlsystems bzw. der Brennkraftmaschine oder eines zugehörigen Fahrzeugs erhöht. Die Frischluftanlage weist ferner wenigstens einen weiteren Ladeluftkühler zum Kühlen der Ladeluft und einen zumindest einen Bypass zum Vorbeiführen der Ladeluft an einem der Ladeluftkühler auf. Somit kann die Ladeluft mit einer erhöhten Variabilität gekühlt und/oder genauer auf einer erwünschten Temperatur gekühlt werden, wodurch insbesondere die Effizienz der Kühlung der Ladeluft erhöht wird.

Dem Erfindungsgedanken entsprechend, weist der Kältekreis einen Kältekreiskompressor zum Antreiben des Kältemittels und einen Verdampfer zum Verdampfen des Kältemittels auf. Zum Verdichten bzw. Aufladen der der Brennkraftmaschine zuzuführenden Luft ist in der Frischluftanlage ein Verdichter vorgesehen, wobei die vom Verdichter verdichtete Luft oder Ladeluft durch einen ersten Ladeluftkühler in der Frischluftanlage gekühlt wird. Der Wärmeaustausch zwischen dem Kältekreis und der Frischluftanlage erfolgt über den ersten Verdampfer und den ersten Ladeluftkühler. Das heißt, dass der erste Verdampfer und der erste Ladeluftkühler im Zwischenkreis eingebunden sind, wobei der Zwischenkreis fluidisch vom Kältekreis und der Frischluftanlage getrennt ist. In anderen Worten, die Wärmeübertragung zwischen dem Kältekreis und der Frischluftanlage läuft über den Zwischenkreis bzw. über das Zwischenmedium. Der Kältekreis kühlt über den ersten Verdampfer den Zwischenkreis bzw. das Zwischenmedium, während der Zwischenkreis bzw. das Zwischenmedium über den ersten Ladeluftkühler die Ladeluft kühlt.

Der Kältekreis weist gewöhnlich zusätzlich zum ersten Verdampfer und dem Kältekreiskompressor einen Kondensator auf, der stromab des Kältemittelkompressors und stromauf des ersten Verdampfers angeordnet ist. Dabei dient der Kondensator dem Kondensieren des Kältemittels.

Gewöhnlich dient der Kältekreis auch der Kühlung eines anderen Systems. In einem Fahrzeug kann der Kältekreis beispielsweise dazu dienen, einen Innenraum des Fahrzeugs zu kühlen. Der Kältekreis kann also Bestandteil einer Klimaanlage des Fahrzeugs sein.

Wie vorstehend erwähnt, ist in der Frischluftanlage zumindest ein weiterer Ladeluftkreis vorgesehen, der dem Kühlen der Ladeluft dient. Dabei weist die Frischluftanlage wenigstens einen Bypass zum Umgehen zumindest einer der Ladeluftkühler auf. Mit Hilfe eines solchen Bypasses, der nachfolgend als Kühlerbypass bezeichnet wird, kann also die Ladeluft an wenigstens einem der Ladeluftkühler vorbeigeführt werden. Auf diese Weise lässt sich die Ladeluft durch eine geeignete Führung durch die Frischluftanlage, insbesondere durch den zumindest einen Kühlerbypass, auf eine erwünschte Temperatur kühlen. Insbesondere ist es möglich, die Ladeluft am ersten Ladeluftkühler vorbeizuführen. Dies kann beispielsweise erwünscht sein, wenn keine Kühlung der Ladeluft durch den ersten Ladeluftkühler notwendig ist, um eine erwünschte Temperatur der Ladeluft zu erreichen. Auch kann hierdurch die vom Kältekreis für die Kühlung der Ladeluft bereitgestellte Leistung oder Kühlleistung an die jeweilige Anforderung angepasst und die erforderliche Leistung des Kühlkreises reduziert werden. Alternativ oder zusätzlich kann hierdurch die Kühlung der Ladeluft durch den ersten Ladeluftkühler an die zur Verfügung stehende Leistung des Kältekreises angepasst werden. Zu denken ist etwa an Situationen, in denen die Kälteleistung des Kältekreises anderweitig, beispielsweise für eine Klimaanlage, zur Verfügung gestellt werden muss und hierdurch für die Kühlung der Ladeluft keine oder weniger Leistung übrig bleibt. In bestimmten Situationen, insbesondere bei bestimmten Betriebspunkten der Brennkraftmaschine und/oder des zugehörigen Fahrzeugs, ist es ferner wünschenswert, die Ladeluft nicht oder möglichst wenig zu kühlen oder eine Kühlung der Ladeluft durch den Zwischenkreis und somit durch den ersten Ladeluftkühler zu reduzieren, insbesondere zu unterbinden. Zu diesen Situationen gehören beispielsweise Phasen mit geringer Last bzw. mit einer Grundlast der Brennkraftmaschine, in denen eine übermäßige Kühlung der Ladeluft dem Gesamtwirkungsgrad bzw. der Schadstoffemission der Brennkraftmaschine entgegenwirkt. Zum Kühlen des anderen Systems kann prinzipiell der erste Verdampfer zum Einsatz kommen. Das heißt, dass der erste Verdampfer zum Kühlen der Ladeluft über den Zwischenkreis bzw. über den ersten Ladeluftkühler und zum Kühlen des anderen Systems, insbesondere in der Klimaanlage, eingesetzt werden kann. Vorstellbar ist es auch, für die Kühlung des anderen Systems im Kältekreis einen anderen Verdampfer, also einen zweiten Verdampfer vorzusehen. Somit ist es möglich, den ersten Verdampfer ausschließlich für die Kühlung der Ladeluft einzusetzen, was eine effizientere und/oder unabhängigere Kühlung der Ladeluft erlaubt.

Bevorzugt sind der erste Verdampfer und der zweite Verdampfer in unterschiedlichen Zweigen des Kältekreises angeordnet. Dementsprechend weist der Kältekreis einen ersten Zweig sowie einen vom ersten Zweig unterschiedlichen zweiten Zweig auf. Die Zweige können an einer gemeinsamen Abzweigstelle vom Kältekreis abzweigen. Bevorzugt zweigt der Kältekreis stromab des Kondensators in die beiden Zweige auf, die dann stromauf des Kondensators wieder zum Kältekreis ineinander münden. Dabei ist der erste Verdampfer im ersten Zweig angeordnet, während der zweite Verdampfer im zweiten Zweig angeordnet ist. In einer äquivalenten Betrachtungsweise kann der erste Zweig als den zweiten Zweig umgehender bezeichnet werden. Hierdurch ist es möglich, den ersten Verdampfer im ersten Zweig zum Kühlen der Ladeluft, insbesondere ausschließlich hierfür, einzusetzen, während der zweite Verdampfer für den anderen Verwendungszweck des Kältekreises, also beispielsweise dem Betrieb der Klimaanlage, zum Einsatz kommt. Dementsprechend kann der zweite Verdampfer als Hauptverdampfer bezeichnet werden, während der erste Verdampfer als Nebenverdampfer bezeichnet werden kann. Entsprechendes gilt für den ersten Zweig und den zweiten Zweig: Der erste Zweig kann als Nebenzweig des Kältekreises bezeichnet werden, während der zweite Zweig als Hauptzweig des Kältekreises bezeichnet werden kann. Das Versehen des Kältekreises mit zwei Zweigen und der Anordnung jeweils eines der Verdampfer in einem solchen zugehörigen Zweig erlaubt ein flexibles Betreiben des Kältekreises. Zudem sind die Kühlung der Ladeluft über den Zwischenkreis und die Kühlung des anderen Systems quasi voneinander getrennt, was weitere Betriebsvorteile zur Folge hat.

Vorteilhaft ist eine Aufteilung der Strömung des Kältemittels zwischen dem ersten Zweig und dem zweiten Zweig möglich. Dies ist bevorzugt mit Hilfe einer Kältekreisventileinrichtung realisiert, die derart ausgestaltet bzw. angeordnet ist, dass sie die Strömung des Kältemittels zwischen dem ersten Zweig und dem zweiten Zweig des Kältekreises aufteilt. Dabei ist die Kältekreisventileinrichtung insbesondere derart ausgestaltet, dass sie eine Strömung des Kältemittels ausschließlich durch den zweiten Zweig erlaubt. Dadurch ist es möglich, keine Kühlleistung des Kältekreises an den Zwischenkreis bzw. den ersten Ladeluftkühler abzugeben. Ferner ist es vorstellbar die Kältekreisventileinrichtung derart auszugestalten, dass eine ausschließliche Durchströmung des ersten Zweigs des Kältekreises möglich ist. Hierdurch ist es insbesondere möglich, die an den Zwischenkreis abgegebene Kühlleistung des Kältekreises zu erhöhen.

Die Kältekreisventileinrichtung ist vorteilhalft derart ausgestaltet, dass eine beliebige Aufteilung der Strömung des Kältemittels zwischen dem ersten Zweig und dem zweiten Zweig möglich ist. Dabei ist die Aufteilung der Strömung zwischen dem ersten Zweig und dem zweiten Zweig bevorzugt stufenartig und/oder kontinuierlich einstellbar.

Die Kältekreisventileinrichtung kann ein Ventil oder mehrere Ventile aufweisen, die an beliebiger Stelle im Kältekreis angeordnet sein können. Insbesondere kann die Kältekreisventileinrichtung wenigstens ein solches Ventil im ersten Zweig, im zweiten Zweig bzw. einer Abzweigstelle des Kältekreises, an dem der erste Zweig und der zweite Zweig abzweigen, aufweisen.

Zum Kühlen der Ladeluft ist vorteilhaft ferner ein Ladeluftkühlkreis vorgesehen, in dem ein Kühlmittel zirkuliert. Der Ladeluftkühlkreis weist einen zweiten Ladeluftkühler zum Kühlen der Ladeluft sowie einen Kühlmittelkühler zum Kühlen des Kühlmittels auf. Der zweite Ladeluftkühler ist also ein solcher weiterer Ladeluftkühler in der Frischluftanlage bzw. bildet einen solchen weiteren Ladeluftkühler. Dabei ist der zweite Ladeluftkühler vorzugsweise stromauf des ersten Ladeluftkühlers in der Frischluftanlage angeordnet. Hierdurch ist es insbesondere möglich, die Ladeluft unabhängig vom und/oder zusätzlich zum ersten Ladeluftkühler zu kühlen. Stellt der Kältekreis keine Kühlleistung zum Kühlen der Ladeluft zur Verfügung, so ist es durch den Ladeluftkühlkreis möglich, trotzdem eine Kühlung der Ladeluft zu erreichen. Der Ladeluftkühlkreis kann zum Antreiben des Kühlmittels einen zugehörigen Kompressor aufweisen, der nachfolgend als Kühlkreiskompressor bezeichnet wird. Hierbei sind der Zwischenkreis, der Ladeluftkühlkreis sowie der Kältekreis jeweils fluidisch voneinander getrennt.

Ein solcher weiterer Ladeluftkühler der Frischluftanlage kann auch in einen Motorkühlkreis des Fahrzeugs zum Kühlen der Brennkraftmaschine eingebunden sein. Das heißt, dass ein im Motorkühlkreis eingebundener Ladeluftkühler einen solchen weiteren Ladeluftkühler bildet. Somit ist eine Kühlung der Ladeluft unabhängig vom bzw. zusätzlich zum ersten Ladeluftkühler und/oder zweiten Ladeluftkühler möglich. Im Motorkühlkreis zirkuliert ein Motorkühlmittel, das die Kühlung der Brennkraftmaschine bewirkt. Dabei ist der erste Ladeluftkühler bevorzugt in der Frischluftanlage stromab des dritten Ladeluftkühlers und stromab des Ladeluftkühlers angeordnet.

Bevorzugt sind hierbei Varianten, bei denen der dritte Ladeluftkühler in der Frischluftanlage stromauf des zweiten Ladeluftkühlers angeordnet ist. Hierbei kann der zweite Ladeluftkühler eine stärkere Kühlleistung aufweisen als der dritte Ladeluftkühler. Durch die Anordnung des dritten Ladeluftkühlers stromauf des zweiten Ladeluftkühlers in der Frischluftanlage wird die Ladeluft also zunächst durch den dritten Ladeluftkühler gekühlt und anschließend durch den zweiten Ladeluftkühler weitergekühlt.

Bevorzugt sind Ausführungsformen, bei denen die Ladeluft mittels des zweiten Ladeluftkühlers auf eine niedrigere Temperatur gekühlt wird, als mit dem dritten Ladeluftkühler.

Alternativ oder zusätzlich sind Varianten vorteilhaft, bei denen die Ladeluft mittels des ersten Ladeluftkühlers auf eine niedrigere Temperatur gekühlt wird als mit dem zweiten Ladeluftkühler und/oder mit dem dritten Ladeluftkühler.

Hierbei kann der Ladeluftkühlkreis eine höhere Kälteleistung zur Kühlung der Ladeluft zur Verfügung stellen als der Kältekreis, wobei der Ladeluftkühlkreis undoder der Kältekreis entsprechend ausgestaltet sein.

Selbstverständlich können im jeweiligen Kreis auch mehrere Ladeluftkühler eingebunden sein, die einen solchen weiteren Ladeluftkühler bilden. Das heißt, dass insbesondere im Kältekreis und/oder im Zwischenkreis und/oder im Ladeluftkühlkreis und/oder im Motorkühlkreis jeweils zwei oder mehr Ladeluftkühler angeordnet sein können. Hierbei kann wenigstens ein solcher Ladeluftkühler mittel eines solchen Kühlerbypasses umgangbar sein. Es können beispielsweise zwei oder mehrere Ladeluftkühler im Zwischenkreis eingebunden sein, wobei die Ladeluft über wenigstens einen solchen Kühlerbypass an zumindest einem der Ladeluftkühler wenigstens teilweise vorbeigeführt werden kann.

Das Umgehen wenigstens einer der Ladeluftkühler mittels wenigstens eines solchen Kühlerbypasses kann auf beliebige Weise realisiert sein.

Vorstellbar ist es beispielsweise, dem jeweiligen Ladeluftkühler einen solchen Kühlerbypass zuzuordnen, über den Ladeluft an diesem Ladeluftkühler vorbeigeführt werden kann. D.h., dass dem ersten Ladeluftkühler ein erster Kühlerbypass zugeordnet ist, während dem zweiten Ladeluftkühler ein zweiter Kühlerbypass zugeordnet ist und dem dritten Ladeluftkühler ein dritter Kühlerbypass zugeordnet ist.

Vorstellbar sind auch Varianten, bei denen wenigstens zwei der Ladeluftkühlern ein solcher gemeinsamer Kühlerbypass zugeordnet ist. D.h., dass mittels eines solchen gemeinsamen Kühlerbypasses Ladeluft an wenigstens zwei der Ladeluftkühlern vorbeigeführt werden kann.

Bevorzugt sind Ausführungsformen, bei denen zum Vorbeiführen der Ladeluft an wenigstens einem der Ladeluftkühler über zumindest einen solchen Kühlerbypass eine Ventileinrichtung zum Einsatz kommt, die die Ladeluft zumindest teilweise durch wenigstens einen solchen Kühlerbypass leitet und nachfolgend als Bypassventileinrichtung bezeichnet wird. Vorstellbar sind hierbei Varianten, bei denen zumindest eine solche Bypassventileinrichtung, die Ladeluft gänzlich durch einen solchen, zugehörigen Kühlerbypass leiten kann.

Bevorzugt sind Varianten, bei denen zumindest eine solche Bypassventileinrichtung derart ausgestaltet ist, dass sie einen beliebigen Anteil der Ladeluft durch einen solchen zugehörigen Kühlerbypass leitet bzw. umleitet. Hierzu kann die jeweilige Bypassventileinrichtung stufenartig und/oder kontinuierlich einstellbar sein. Hierdurch ist insbesondere eine beliebige Aufteilung der Strömung der Ladeluft durch den jeweiligen Ladeluftkühler und/oder am jeweiligen Ladeluftkühler vorbei möglich.

Bevorzugt sind diejenigen Ausgestaltungen, bei denen die zumindest eine Bypassventileinrichtung eine Dosierung der Strömung der Ladeluft zwischen dem zumindest einen Kühlerbypass und den Ladeluftkühlern erlaubt. Besonderes vorteilhaft ist eine beliebige Dosierung bzw. Aufteilung möglich. Somit ist es möglich, die durch die Frischluftanlage strömende Ladeluft in beliebigen Teilmengen durch den zumindest einen Kühlerbypass strömen zu lassen. Insbesondere ist es hierdurch auch möglich, eine Strömung der Ladeluft durch zumindest einen solchen Kühlerbypass zu verhindern, so dass die Ladeluft gänzlich durch den entsprechenden zumindest einen Ladeluftkühler strömt. Durch eine entsprechende Regelung der wenigstens einen Bypassventileinrichtung kann somit eine Kühlung der zur Brennkraftmaschine gelangenden Ladeluft variiert werden, da die durch den Kühlerbypass strömende Ladeluft nicht durch den zugehehörigen zumindest einen Ladeluftkühler gekühlt wird und stromab des zugehörigen zumindest einen Ladeluftkühlers der in der Frischluftanlage strömenden Ladeluft beigemischt wird.

Das Kühlmittel, das Kältemittel und das Zwischenmedium sowie das Motorkühlmittel können jeweils unterschiedlich sein. Insbesondere kann das Kältemittel ein phasenwechselndes Kältemittel sein. Das Kühlmittel kann ein Niedertemperaturkühlmittel sein. Das Zwischenmedium kann ein Wasser-Glykol-Gemisch sein bzw. ein solches Gemisch aufweisen. Das Motorkühlmittel kann beispielsweise Wasser sein. Selbstverständlich ist es auch möglich, dass das Kühlmittel, das Kältemittel, das Motorkühlmittel und das Zwischenmedium wenigstens teilweise identisch sind.

Bei bevorzugten Ausführungsformen sind der Kondensator des Kältekreises und der Kühlmittelkühler benachbart angeordnet. Die benachbarte Anordnung des Kondensators und des Kühlmittelkühlers ist dabei vorteilhaft derart ausgestaltet, dass der Kondensator und der Kühlmittelkühler gemeinsam durch eine Luftströmung gekühlt werden können. Insbesondere in einem zugehörigen Fahrzeug ist es somit möglich, den Kondensator und den Kühlmittelkühler durch einen Kühlluftstrom zu kühlen, der zumindest teilweise durch den Fahrtwind und/oder durch ein Gebläse erzeugt und/oder verstärkt wird. Dabei sind der Kondensator und der Kühlmittelkühler bevorzugt derart angeordnet, dass sie nacheinander vom Kühlluftstrom gekühlt werden. Dies kann beispielsweise durch eine im Wesentlichen parallele Anordnung des Kondensators und des Kühlmittelkühlers erreicht werden. Ferner ist die Anordnung vorteilhaft derart ausgestaltet, dass der Kondensator vor dem Kühlmittelkühler vom Kühlluftstrom gekühlt wird.

Zum Zirkulieren des Zwischenmediums im Zwischenkreis kann eine Fördereinrichtung, insbesondere ein Zwischenkreiskompressor, vorgesehen sein. Besagte Fördereinrichtung kann dabei auf beliebige Weise betrieben werden. Insbesondere ist vorstellbar, die Zwischenkreisfördereinrichtung konstant zu betreiben. Zur Variation des Wärmeaustausches zwischen dem ersten Ladeluftkühler und dem ersten Verdampfer kann jedoch die Leistung der Fördereinrichtung variiert werden. So kann eine stärkere Zirkulation des Zwischenmediums im Zwischenkreis zu einem stärkeren Wärmeaustausch zwischen dem ersten Ladeluftkühler und dem ersten Verdampfer führen. Auch hierdurch kann die Kühlung der Ladeluft durch den ersten Ladeluftkühler beeinflusst werden.

Grundsätzlich ist vorstellbar, die jeweiligen Kompressoren bzw. Fördereinrichtung des Kühlsystems durch die Brennkraftmaschine anzutreiben. Insbesondere kann vorgesehen sein, dass der Kältekreiskompressor mit der Brennkraftmaschine antriebsverbunden ist. Die Antriebsverbindung zwischen der Brennkraftmaschine und dem Kältekreiskompressor kann dabei regelbar und insbesondere lösbar ausgestaltet sein. Auf diese Weise ist es beispielsweise möglich, bei bestimmten Betriebsphasen der Brennkraftmaschine bzw. des zugehörigen Fahrzeugs, die Antriebsverbindung zwischen dem Kältekreiskompressor und der Brennkraftmaschine zu unterbrechen, um die gesamte Leistung der Brennkraftmaschine anderweitig zur Verfügung zu stellen. Eine solche Phase kann beispielsweise vorliegen, wenn eine Beschleunigung des zugehörigen Fahrzeugs erfolgen soll bzw. wenn die Last der Brennkraftmaschine erhöht wird. Dabei wird durch die Reduzierung bzw. Unterbrechung des Antriebs des Kältekreiskompressors die Strömung des Kältemittels im Kältekreis reduziert, insbesondere unterbrochen. Dementsprechend erfolgt eine Kühlung der Ladeluft mit Hilfe des ersten Ladeluftkühlers vorrangig durch die zuvor im Zwischenkreis bzw. Zwischenmedium gespeicherte Kälteleistung. Die Kälteleistung ist also insbesondere durch die Wärmeaufnahmeleistung des Zwischenkreises gegeben. Hier dienen also der Zwischenkreis bzw. das Zwischenmedium als Kältespeicher zum Kühlen der Ladeluft mittels des ersten Ladeluftkühlers.

Es versteht sich, dass neben der Brennkraftmaschine auch ein Fahrzeug mit einer solchen aufgeladenen Brennkraftmaschine zum Umfang dieser Erfindung gehört.

Zudem können der Kältekreis und/oder der Kühlkreis und/oder der Zwischenkreis zu einem Kühlsystem für die Brennkraftmaschine gehören, das in einem solchen Fahrzeug vorgesehen sein kann.

Selbstverständlich kann der jeweilige Ladeluftkühler wenigstens zwei Kühlstufen aufweisen, wobei wenigstens eine solche Kühlstufe mittels eines solchen Kühlerbypasses umgegangen werden kann. Insbesondere ist es vorstellbar, dass der erste Ladeluftkühler wenigstens zwei Kühlstufen aufweist, wobei wenigstens ein solcher Kühlerbypass vorgesehen sein kann, der die Ladeluft wenigstens anteilig an zumindest einer der Kühlstufen vorbeiführen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen,

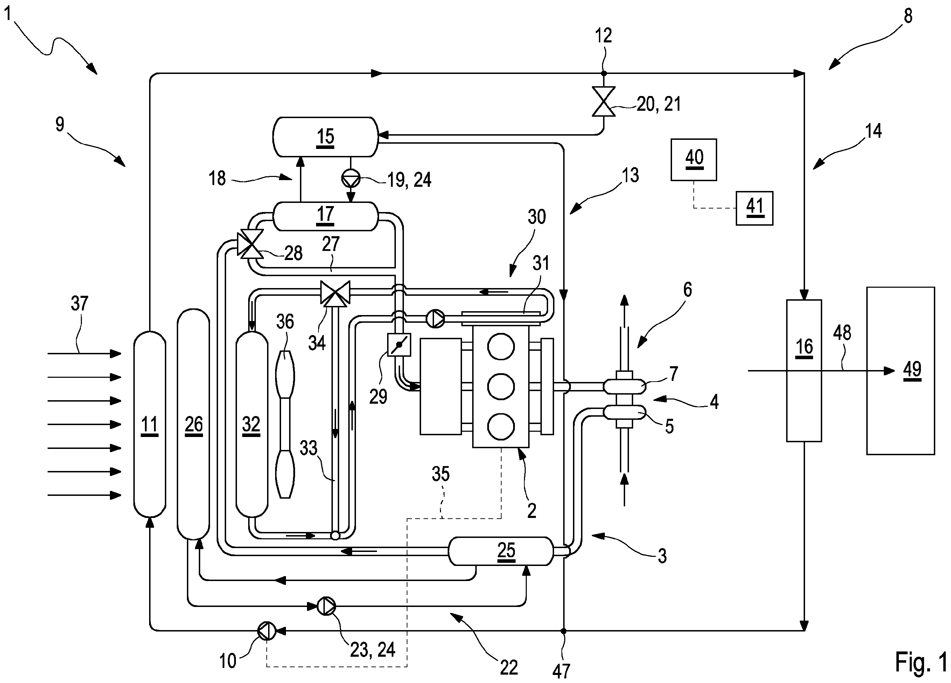

- Fig. 1 bis 4: jeweils eine schematisch, stark vereinfachte, schaltplanartige Darstellung eines Fahrzeugs, bei unterschiedlichen Ausführungsformen.

In Fig. 1 ist ein Fahrzeug 1 dargestellt, das eine Brennkraftmaschine 2 aufweist. Die Brennkraftmaschine 2 dient dem Antrieb des Fahrzeugs 1, wobei das Fahrzeug 1 zum Antrieb auch weitere, hier nicht gezeigte, Antriebsvorrichtungen aufweisen kann. Zum Betreiben der Brennkraftmaschine 2 ist Luft notwendig, die der Brennkraftmaschine 2 mit Hilfe einer Frischluftanlage 3 zugeführt wird. Dabei weist das Fahrzeug 1 einen Abgasturbolader 4 auf, dessen Verdichter 5 in der Frischluftanlage 3 angeordnet ist und die der Brennkraftmaschine 2 zuzuführende Luft verdichtet. Somit wird der Brennkraftmaschine 2 Ladeluft zugeführt. Das Fahrzeug 1 weist ferner eine Abgasanlage 6 auf, die das in der Brennkraftmaschine 2 entstandene Abgas abführt. In der Abgasanlage 6 ist eine Turbine 7 des Abgasturboladers 4 angeordnet, die den Verdichter 5 antreibt.

Durch das Verdichten der Luft erhöht sich die Temperatur der verdichteten Luft bzw. der Ladeluft. Dies wirkt jedoch einer Effizienz der Brennkraftmaschine 2, insbesondere in Leistungsphasen bzw. Lastphasen der Brennkraftmaschine 2, negativ entgegen.

Das Fahrzeug 1 weist ein Kühlsystem 8 auf, das die Frischluftanlage 3 sowie einen Kältekreis 9 umfasst. Im Kältekreis 9 zirkuliert ein Kältemittel, das von einem Kältekreiskompressor 10 des Kältekreises 9 angetrieben ist. Zudem weist der Kältekreis 9 stromab des Kältekreiskompressors 10 einen Kondensator 11 zum Kondensieren des Kältemittels auf. Stromab des Kondensators 11 weist der Kältekreis 9 eine Abzweigstelle 12 auf, von der ein erster Zweig 13 und ein zweiter Zweig 14 des Kältekreises 9 abzweigen. Der erste Zweig 13 und der zweite Zweig 14 münden stromauf des Kältemittelkompressors 10 und somit stromauf des Kondensators 11 in einer Einmündungsstelle 47zum Kältekreis 9 ineinander. Dabei ist im ersten Zweig 13 ein erster Verdampfer 15 des Kältekreises 9 angeordnet, während im zweiten Zweig 14 ein zweiter Verdampfer 16 des Kältekreises 9 angeordnet ist. Demnach fungiert der erste Zweig 13 als ein den zweiten Verdampfer 16 umgehender Bypass des Kältekreises 9.

Zum Kühlen der Ladeluft weist die Frischluftanlage 3 einen ersten Ladeluftkühler 17 auf, der stromab des Verdichters 5 in der Frischluftanlage 3 angeordnet ist. Das Kühlsystem 8 weist zudem einen Zwischenkreis 18 auf, in dem ein Zwischenmedium zirkuliert und der fluidisch vom Kältekreis 9 und der Frischluftanlage 3 getrennt ist. Der erste Verdampfer 15 sowie der erste Ladeluftkühler 17 sind ferner wärmeübertragend im Zwischenkreis 18 eingebunden. Das heißt, dass eine Wärmeübertragung zwischen dem ersten Ladeluftkühler 17 und dem ersten Verdampfer 15 mittels des Zwischenmediums erfolgt. Folglich werden jeweils fluidisch getrennt der erste Ladeluftkühler 17 vom Zwischenmedium und von der Ladeluft durchströmt, während der erste Verdampfer 15 vom Kältemittel und von dem Zwischenmedium fluidisch getrennt durchströmt wird. Folglich sind auch der Kältekreis 9 und die Frischluftanlage 3 fluidisch gänzlich voneinander getrennt, derart dass eine Vermischung von Ladeluft und Kältemittel sowie zwischen Zwischenmedium und Kältemittel bzw. Kühlmittel unterbleibt. Zur Wärmeübertragung zwischen dem ersten Verdampfer 15 und dem ersten Ladeluftkühler 17 ist somit der Zwischenkreis 18 zwischengeschaltet, in dem das Zwischenmedium strömt. Zum Zirkulieren des Zwischenmediums im Zwischenkreis 18 ist eine Zwischenkreisfördereinrichtung 19 vorgesehen, die das Zwischenmedium antreibt.

Der Kältekreis 9 weist zum Aufteilen der Strömung des Kältemittels zwischen dem ersten Zweig 13 und dem zweiten Zweig 14 eine Ventileinrichtung 20 auf, die nachfolgend als Kältekreisventileinrichtung 20 bezeichnet wird. Die Kältekreisventileinrichtung 20 weist ein Ventil 21 auf, das im ersten Zweig 13 angeordnet ist.

Durch Öffnen und Schließen des Ventils 21 kann somit die Strömung des Kältemittels durch den ersten Zweig 13 und folglich auch durch den zweiten Zweig 14 gesteuert werden. Insbesondere ist es somit möglich, eine Strömung des Kältemittels durch den ersten Zweig 13 zu unterbrechen. In diesem Fall erfolgt also keine aktive Kühlung des Zwischenmediums durch den ersten Verdampfer 15.

Das Kühlsystem 8 weist ferner einen Ladeluftkühlkreis 22 auf, in dem ein Kühlmittel zirkuliert. Zum Antreiben des Kühlmittels im Ladeluftkühlkreis 22 weist der Ladeluftkühlkreis 22 eine Fördereinrichtung 23 auf. Die Ladeluftkühlkreisfördereinrichtung 23 und die Zwischenkreisfördereinrichtung 19 können dabei jeweils als ein Kompressor 24 ausgestaltet sein. Der Ladeluftkühlkreis 22 weist des Weiteren einen zweiten Ladeluftkühler 25 zum Kühlen der Ladeluft sowie einen Kühlmittelkühler 26 zum Kühlen des Kühlmittels auf. Hierbei ist der Ladeluftkühlkreis 22 fluidisch vom Kältekreis 9 und vom Zwischenkreis 18 getrennt. Der zweite Ladeluftkühler 25 ist in der Frischluftanlage 3 stromab des Verdichters 5 und stromauf des ersten Ladeluftkühlers 17 angeordnet. Der zweite Ladeluftkühler 17 ist also ein weiterer Ladeluftkühler in der Frischluftanlage 3 Im gezeigten Beispiel ist der Ladeluftkühlkreis 22 ferner derart ausgestaltet, dass er eine permanente Kühlung der Ladeluft ermöglicht.

Die Frischluftanlage 3 weist einen Bypass 27 oder Kühlerbypass 27 auf, der den ersten Ladeluftkühler 17 umgeht. Hierdurch ist es möglich, die Ladeluft zumindest teilweise am ersten Ladeluftkühler 17 vorbeizuführen. Hierzu weist die Frischluftanlage 3 eine Bypassventileinrichtung 28 auf, die eine Aufteilung der Strömung der Ladeluft durch den ersten Ladeluftkühler 17 und am ersten Ladeluftkühler 17 vorbei durch den Kühlerbypass 27 erlaubt. In der Folge kann eine Regulierung der Temperatur der Ladeluft dadurch erzielt werden, dass mit zunehmendem Anteil an durch den ersten Ladeluftkühler 17 strömender Ladeluft eine niedrigere Temperatur der zur Brennkraftmaschine 2 gelangenden Ladeluft erreicht wird.

Zudem kann die Ladeluft zumindest teilweise am ersten Ladeluftkühler 17 vorbeigeführt werden, wenn die Kühlleistung des Kältekreises 9 anderweitig benötigt wird. Zum Drosseln der zur Brennkraftmaschine 2 gelangenden Ladeluft ist ferner eine Drosseleinrichtung 29 vorgesehen, die stromab des ersten Ladeluftkühlers 17 in der Frischluftanlage 3 angeordnet ist.

Das Fahrzeug 1 weist ferner einen Motorkühlkreis 30 zum Kühlen der Brennkraftmaschine 2 auf. Im Motorkühlkreis 30 zirkuliert ein Motorkühlmittel durch einen Wärmetauscher 31 zum Kühlen des Motors und durch einen Motorkühlmittelkühler 32 zum Kühlen des Motorkühlmittels. Zudem weist der Motorkühlkreis 30 einen den Motorkühlmittelkühler 32 umgehenden Motorkühlkreisbypass 33 auf, sodass die Zirkulation des Motorkühlmittels mit Hilfe einer Motorkühlkreisventileinrichtung 34 am Motorkühlmittelkühler 32 vorbeigeführt werden kann. Somit kann eine Kühlung der Brennkraftmaschine 2, beispielsweise in einer Aufwärmphase der Brennkraftmaschine 2, ausgesetzt oder zumindest reduziert werden.

Der Kältekreiskompressor 10 ist durch eine Antriebsverbindung 35 mit der Brennkraftmaschine 2 verbunden. Somit wird der Kältekreiskompressor 10 durch die Brennkraftmaschine 2 angetrieben. Bei bestimmten Anforderungen, insbesondere bei erhöhten Lasten bzw. einer Beschleunigungsphase des Fahrzeugs 1, wird die Antriebsverbindung 35 zwischen der Brennkraftmaschine 2 und dem Kältekreiskompressor 10 getrennt, sodass die gesamte Leistung der Brennkraftmaschine 2 für die erforderliche Last bzw. Beschleunigung zur Verfügung steht. In einer solchen Phase erfolgt die Kühlung der Ladeluft mit Hilfe des ersten Ladeluftkühlers 17 lediglich durch die Wärmeaufnahme des Zwischenmediums im Zwischenkreis 18 bzw. der im Zwischenkreis gespeicherten Kälte. Dabei ist eine Kühlung des Zwischenmediums durch den ersten Verdampfer 15 durch eine reduzierte oder unterbrochene Zirkulation des Kältemittels im Kältekreis 9 zumindest reduziert.

Das Fahrzeug 1 weist ein Gebläse 36 auf, das einen Kühlluftstrom 37 erzeugt, der durch einen Fahrtwind des Fahrzeugs 1 verstärkt werden kann. Der Kondensator 11 des Kältekreises 9, der Kühlmittelkühler 26 des Ladeluftkühlkreises 22 sowie der Motorkühlmittelkühler 32 des Motorkühlkreises 30 sind benachbart und parallel angeordnet, derart dass der Kühlluftstrom 37 den Kondensator 11, den Kühlmittelkühler 26 und den Motorkühlmittelkühler 32 nacheinander anströmt und/oder an diesen vorbeiströmt und sie somit kühlt.

Der Kältekreis 9 kann auch dazu eingesetzt werden, innerhalb des Fahrzeugs 1 eine andere Kühlung zu erreichen. Insbesondere kann der Kältekreis 9 für eine nicht weiter gezeigte Klimaanlage eingesetzt werden. Hierzu kommt der zweite Verdampfer 16 zum Einsatz, der beispielsweise eine Luftströmung 48 in einen hier nicht näher gezeigten Innenraum 49 des Fahrzeugs 1 kühlt.

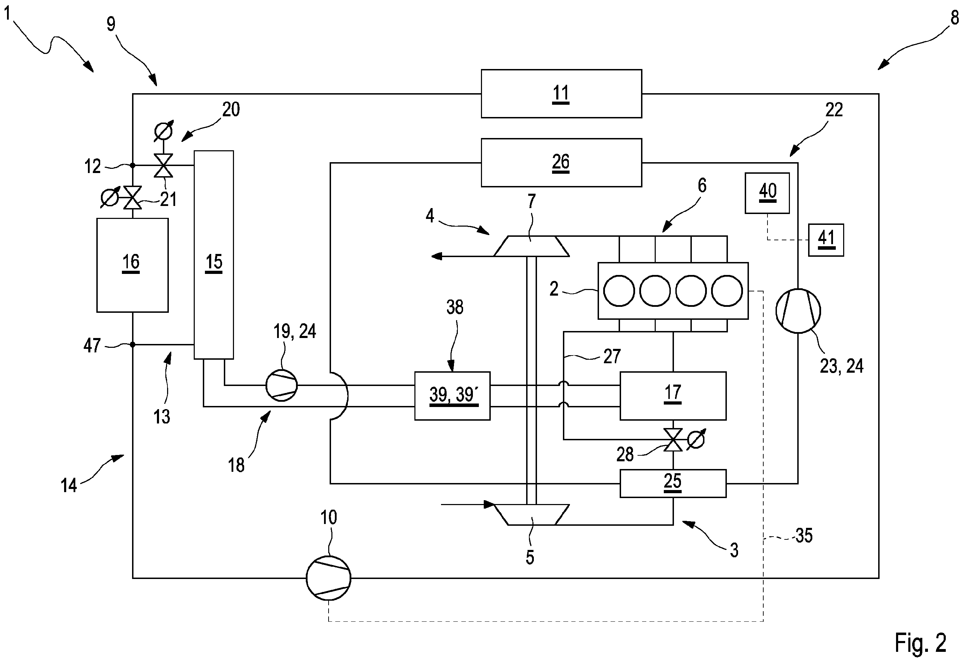

Fig. 2 zeigt ein anderes Ausführungsbeispiel des Fahrzeugs 1. Dabei ist der Motorkühlkreis 30 nicht dargestellt. Im Gegensatz zum in Fig. 1 gezeigten Ausführungsbeispiel weist die Kältekreisventileinrichtung 20 zwei Ventile 21 auf, wobei jeweils ein solches Ventil 21 im ersten Zweig 13 und im zweiten Zweig 14 angeordnet ist.

Der Zwischenkreis 18 weist eine thermische Masse auf, die in der Lage ist, Wärme auszutauschen. Zur thermischen Masse gehören also insbesondere der erste Verdampfer 15, der erste Ladeluftkühler 17, das Zwischenmedium, die Zwischenkreisfördereinrichtung 19 sowie die Verbindungen zwischen diesen Bestandteilen.

Die thermische Masse hat einen Einfluss darauf, wie lange die Ladeluft durch den ersten Ladeluftkühler 17 im Falle einer Unterbrechung der Kühlung des Zwischenmediums durch den ersten Verdampfer 15, weiter gekühlt werden kann. Dementsprechend kann eine Abstimmung des Zwischenkreises 18, insbesondere durch eine entsprechende Wahl des Volumens, der Wärmeleitfähigkeit sowie der thermischen Speicherfähigkeit Einfluss auf besagte Dauer genommen werden, die einer vorgegebenen Zeit entspricht.

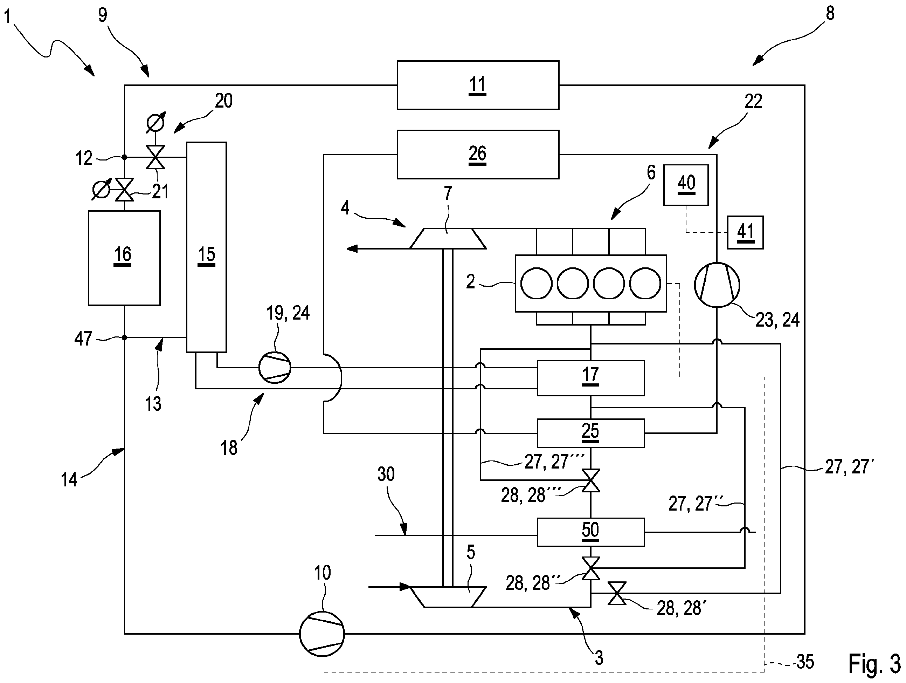

Figur 3 zeigt eine weitere Variante der Brennkraftmaschine 2 bzw. des Fahrzeugs 1. Dabei ist in der Frischluftanlage 3 ein dritter Ladeluftkühler 50 angeordnet, der in der Frischluftanlage 3 stromauf des zweiten Ladeluftkühlers angeordnet ist. Der dritte Ladeluftkühler 50 ist also auch ein solcher weiterer Ladeluftkühler. Der dritte Ladeluftkühler 50 ist im Motorkühlkreis 30 eingebunden, der lediglich teilweise dargestellt ist. D.h., dass die Ladeluft durch den dritten Ladeluftkühler 50, den zweiten Ladeluftkühler 25 sowie den ersten Ladeluftkühler 17 gekühlt werden kann. In Figur 3 sind ferner drei Kühlerbypässe 27 zu erkennen, wobei über den jeweiligen Kühlerbypass 27 Ladeluft an wenigstens zwei der Ladeluftkühlern 17, 25, 50 vorbeigeführt werden kann. Hierbei zweigt ein erster Kühlerbypass 27' stromauf des dritten Ladeluftkühlers 50 von der Frischluftanlage 3 ab und stromab des ersten Ladeluftkühlers 17 wieder in die Frischluftanlage 3 ein. D.h., dass über den ersten Kühlerbypass 27' die Ladeluft an allen Ladeluftkühlern 17, 25, 50 vorbeigeführt werden kann. Hierbei ist der Anteil der durch den ersten Kühlerbypass 27 strömenden Ladeluft mit Hilfe einer solchen ersten Bypassventileinrichtung 28' beliebig einstellbar, die dem ersten Kühlerbypass 27' zugeordnet ist. Ein zweiter Kühlerbypass 27" zweigt in der Frischluftanlage 3 stromauf des dritten Ladeluftkühlers 50 von der Frischluftanlage 3 ab und mündet zwischen dem ersten Ladeluftkühler 17 und dem zweiten Ladeluftkühler 25 in die Frischluftanlage 3 ein. Über den zweiten Kühlerbypass 27" kann die Ladeluft also am zweiten Ladeluftkühler 25 und am dritten Ladeluftkühler 50 vorbeigeführt werden. Auch dem zweiten Kühlerbypass 27" ist eine solche Bypassventileinrichtung 28" zugeordnet, über die der durch den zweiten Kühlerbypass 27" strömende Anteil der Ladeluft beliebig einstellbar ist. Ein dritter Kühlerbypass 27'" zweigt von der Frischluftanlage 3 zwischen dem zweiten Ladeluftkühler 25 und dem dritten Ladeluftkühler 50 ab und mündet stromab des ersten Ladeluftkühlers 17 in die Frischluftanlage 3. Über den dritten Kühlerbypass 27'" kann also Ladeluft an dem zweiten Ladeluftkühler 25 und an dem ersten Ladeluftkühler 17 vorbeigeführt werden. Dem dritten Kühlerbypass 27 ist auch eine solche Bypassventileinrichtung 28'" zugeordnet, über die ein beliebiger Anteil der Ladeluft durch den dritten Kühlerbypass 27 geleitet werden kann.

Um den Anteil der durch den jeweiligen Kühlerbypass 27 strömenden Ladeluft beliebig einzustellen, sind die Bypassventileinrichtungen 28 entsprechend ausgestaltet. Hierzu können die Bypassventileinrichtungen 28 beispielsweise gestuft und/oder kontinuierlich einstellbar sein.

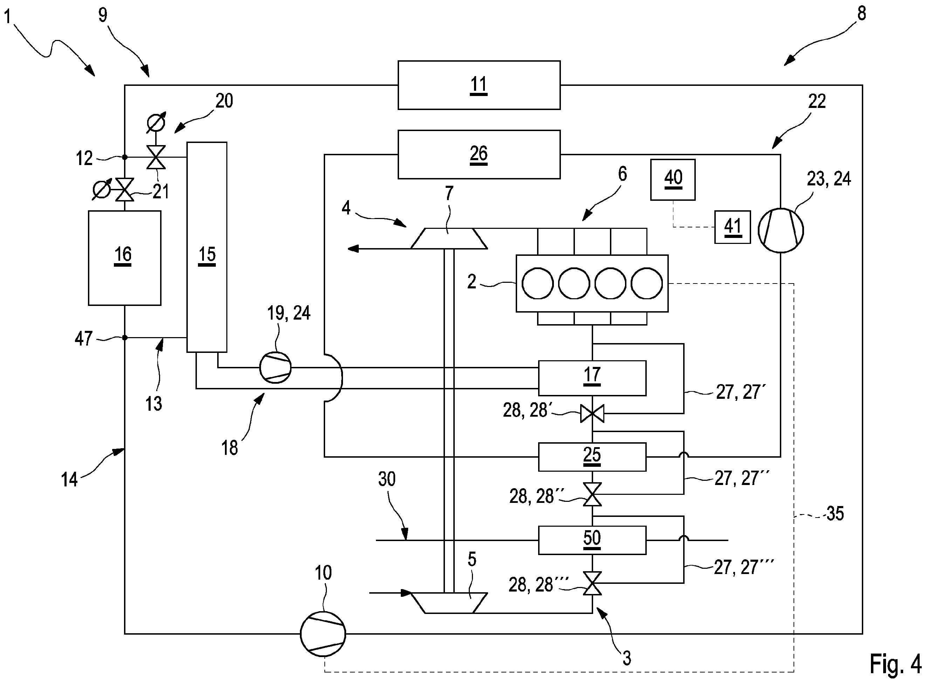

Figur 4 zeigt ein weiteres Beispiel einer solchen Brennkraftmaschine 2 bzw. eines solchen Fahrzeugs 1. Im Unterschied zum in Figur 3 gezeigten Beispiel ist beim in Figur 4 gezeigten Beispiel jedem Ladeluftkühler 17, 25, 50 ein solcher Kühlerbypass 27 zugeordnet. D.h., dass ein erster Kühlerbypass 27' vorgesehen ist, der zwischen dem ersten Ladeluftkühler 17 und dem zweiten Ladeluftkühler 25 von der Frischluftanlage 3 abzweigt und stromab des ersten Ladeluftkühlers 17 in die Frischluftanlage 3 mündet. Somit kann zumindest ein Anteil der Ladeluft am ersten Ladeluftkühler 17 vorbeigeführt werden. Zudem ist ein zweiter Kühlerbypass 27" vorgesehen, der zwischen dem zweiten Ladeluftkühler 25 und dem dritten Ladluftkühler 50 von der Frischluftanlage 3 abzweigt und zwischen dem zweiten Ladeluftkühler 25 und dem ersten Ladeluftkühler 17 in die Frischluftanlage 3 mündet. Somit kann zumindest ein Anteil der Ladeluft am zweiten Ladeluftkühler 25 vorbeigeführt werden. Darüber hinaus ist ein dritten Kühlerbypass 27'" vorgesehen, der stromauf des dritten Ladeluftkühlers 50 von der Frischluftanlage 3 abzweigt und zwischen dem dritten Ladeluftkühler 50 und dem zweiten Ladeluftkühler 25 in die Frischluftanlage 3 mündet, um die Ladeluft zumindest anteilig am dritten Ladeluftkühler 50 vorbeizuführen. Dabei ist dem jeweiligen Kühlerbypass 27 eine solche Bypassventileinrichtung 28 zugeordnet, die eine beliebige Aufteilung der Strömung der Ladeluft in dem zugehörigen Kühlerbypass 27 gewährleistet.

In den gezeigten Beispielen weist das Fahrzeug 1 bzw. die Brennkraftmaschine 2 eine Steuereinrichtung 40 auf, die das Fahrzeug 1, insbesondere das Kühlsystem 8 bzw. die Brennkraftmaschine 2 steuert. Hierzu ist die Steuereinrichtung 40 auf geeignete Weise, z.B. über elektrische Leitungen, kommunizierend mit den Ventileinrichtungen 20, 28, 34verbunden. Zudem ist die Steuereinrichtung 40 auf geeignete Weise, insbesondere durch elektrische Leitungen, kommunizierend mit der Antriebsverbindung 35 zwischen der Brennkraftmaschine 2 und dem Kältekreiskompressor 10 verbunden. Die Steuereinrichtung 40 ist ferner mit Messeinrichtungen 41 des Fahrzeugs 1 bzw. des Kühlsystems 2 verbunden, die Betriebszustände bzw. zugehörige Betriebsparameter des Fahrzeugs 1 sowie des Kühlsystems 8 ermitteln. Hierzu gehören insbesondere Temperaturen des Fahrzeugs, der Ladeluft, der Brennkraftmaschine 2 sowie des Kühlsystems 8.

Die Steuereinrichtung 40 ist derart ausgestaltet, dass sie insbesondere die Bypassventileinrichtungen 28 steuert. Die Steuerung läuft dabei insbesondere derart, dass die Steuereinrichtung 40 durch eine entsprechende Steuerung der Bypassventileinrichtungen 28 eine beliebige Aufteilung der Strömung der Ladeluft durch die jeweiligen Ladeluftkühler 17, 25, 50 regeln kann, in dem ein entsprechender Anteil der Ladeluft über wenigstens einen solchen Kühlerbypass 27 an zumindest einem der Ladeluftkühler 17, 25, 50 vorbeigeführt wird. Eine solche Steuerung kann insbesondere in Abhängigkeit der von der Messeinrichtung 41 ermittelten Werte erfolgen. Dabei kann insbesondere berücksichtigt werden, welche Temperatur der Ladeluft in der Brennkraftmaschine 2 benötigt wird. Alternativ oder zusätzlich kann die Steuereinrichtung 40 berücksichtigen, welche Kühlleistung des jeweiligen Ladeluftkühlers 17, 25, 50 zur Verfügung steht. Insbesondere ist es vorstellbar, dass die Ladeluft am ersten Ladeluftkühler 17 vorbeigeführt wird, wenn eine entsprechend starke Kühlung der Ladeluft nicht erwünscht ist und/oder wenn die Kühlleistung im Kältemittelkreis 9 bzw. im Zwischenkreis 18 nicht vorhanden ist und/oder anderen Anwendungen, beispielsweise einer hier nicht gezeigten Klimaanlage, zu Verfügung gestellt werden muss.

## Patentansprüche

1. Aufgeladene Brennkraftmaschine (2), vorzugsweise in einem Fahrzeug (1),
- mit einem Kältekreis (9), in dem ein Kältemittel zirkuliert und der einen Kältekreiskompressor (10) zum Antreiben des Kältemittels und einen ersten Verdampfer (15) zum Verdampfen des Kältemittels aufweist,
- mit einer Frischluftanlage (3) zum Zuführen von Frischluft zur Brennkraftmaschine (2), in der ein Verdichter (5) angeordnet ist,
- wobei die Frischluftanlage (3) einen ersten Ladeluftkühler (17) zum Kühlen der von dem Verdichter (5) erzeugten Ladeluft aufweist,
- wobei die Frischluftanlage (3) wenigstens einen weiteren Ladeluftkühler (25, 50) zum Kühlen der Ladeluft aufweist,
- mit einem Ladeluftkühlkreis (22) zum Kühlen der Ladeluft, der einen zweiten Ladeluftkühler (25) der Frischluftanlage (3) aufweist, wobei im Ladeluftkühlkreis (22) ein Kühlmittel zirkuliert,
- wobei die Frischluftanlage (3) wenigstens einen Kühlerbypass (27) zum Umgehen zumindest eines der Ladeluftkühler (17, 25, 50) aufweist, **dadurch gekennzeichnet,**
- **dass** die Brennkraftmaschine (2) einen Zwischenkreis (18) aufweist, in dem ein Zwischenmedium zirkuliert und in dem der erste Verdampfer (15) und der erste Ladeluftkühler (17) wärmeübertragend eingebunden sind,
- **dass** der Zwischenkreis (18) fluidisch vom Kältekreis (9) und der Frischluftanlage (3) sowie dem Ladeluftkühlkreis (22) getrennt ist.

2. Brennkraftmaschine nach Anspruch 1,
**dadurch gekennzeichnet,**
**dass** die Brennkraftmaschine (2) einen Motorkühlkreis (30) zum Kühlen der Brennkraftmaschine (2) aufweist, in dem ein Motorkühlmittel zirkuliert, wobei im Motorkühlkreis (30) ein dritter Ladeluftkühler (50) der Frischluftanlage (3) zum Kühlen der Ladeluft eingebunden ist.

3. Brennkraftmaschine nach Anspruch 1 oder 2,
**dadurch gekennzeichnet,**
**dass** der dritte Ladeluftkühler (50) in der Frischluftanlage (3) stromauf des zweiten Ladeluftkühlers (25) angeordnet ist.

4. Brennkraftmaschine nach einem der Ansprüche 1 bis 3,
**dadurch gekennzeichnet,**
**dass** die weiteren Ladeluftkühler (25, 50) in der Frischluftanlage (3) stromauf des ersten Ladeluftkühlers (17) angeordnet sind.

5. Brennkraftmaschine nach einem der Ansprüche 1 bis 4,
**gekennzeichnet durch**,
zumindest eine Bypassventileinrichtung (28) zum steuerbaren Umleiten der Ladeluft durch wenigstens einen solchen Kühlerbypass (27).

6. Brennkraftmaschine nach Anspruch 5,
**dadurch gekennzeichnet,**
**dass** zumindest eine solche Bypassventileinrichtung (28) stufenartig einstellbar ist.

7. Brennkraftmaschine nach Anspruch 5 oder 6,
**dadurch gekennzeichnet,**
**dass** zumindest eine solche Bypassventileinrichtung (28) kontinuierlich einstellbar ist.

8. Brennkraftmaschine nach einem der Anspruche 1 bis 7,
**dadurch gekennzeichnet,**
**dass** jedem Ladeluftkühler (17, 25, 50) ein solcher Kühlerbypass (27) separat zugeordnet ist.

9. Brennkraftmaschine nach einem der Ansprüche 1 bis 7,
**dadurch gekennzeichnet,**
**dass** wenigstens zwei der Ladeluftkühlern (17, 25, 50) ein solcher Kühlerbypass (27) gemeinsam zugeordnet ist.

10. Fahrzeug (1) mit einer aufgeladenen Brennkraftmaschine (2), einer Frischluftanlage (3) und einem Kältekreis (9), gemäß einem der Ansprüche 1 bis 9.

## Claims

1. Supercharged internal combustion engine (2), preferably in a vehicle (1),
- comprising a cooling circuit (9) in which a coolant circulates and which has a cooling circuit compressor (10) for driving the coolant and a first evaporator (15) for evaporating the coolant,
- comprising a fresh air system (3) for supplying fresh air to the internal combustion engine (2), in which fresh air system (3) a compressor (5) is arranged,
- wherein the fresh air system (3) has a first charge air cooler (17) for cooling the charge air generated by the compressor (5),
- wherein the fresh air system (3) has at least one further charge air cooler (25, 50) for cooling the charge air,
- comprising a charge air cooling circuit (22) for cooling the charge air which has a second charge air cooler (25) of the fresh air system (3), wherein a coolant circulates in the charge air cooling circuit (22),
- wherein the fresh air system (3) has at least one cooler bypass (27) for bypassing at least one of the charge air coolers (17, 25, 50),
**characterised in that**
- the internal combustion engine (2) has an intermediate circuit (18) in which an intermediate medium circulates and in which the first evaporator (15) and the first charge air cooler (17) are integrated in a heat-transferring manner,
- the intermediate circuit (18) is fluidically separate from the cooling circuit (9) and the fresh air system (3), and from the charge air circuit (22).

2. Internal combustion engine according to claim 1,
**characterised in that**
the internal combustion engine (2) has a motor cooling circuit (30) for cooling the internal combustion engine (2), in which motor cooling circuit a motor coolant circulates, wherein a third charge air cooler (50) of the fresh air system (3) is integrated in the motor cooling circuit (30) for cooling the charge air.

3. Internal combustion engine according to claim 1 to 2,
**characterised in that**
the third charge air cooler (50) is arranged upstream of the second charge air cooler (25) in the fresh air system (3).

4. Internal combustion engine according to any of claims 1 to 3,
**characterised in that**
the further charge air coolers (25, 50) are arranged upstream of the first charge air cooler (17) in the fresh air system (3).

5. Internal combustion engine according to any of claims 1 to 4,
**characterised by**
at least one bypass valve device (28) for controllably diverting the charge air through at least one such cooler bypass (27).

6. Internal combustion engine according to claim 5,
**characterised in that**
at least one such bypass valve device (28) is adjustable in a step-like manner.

7. Internal combustion engine according to claim 5 or 6,
**characterised in that**
at least one such bypass valve device (28) is continuously adjustable.

8. Internal combustion engine according to any of claims 1 to 7,
**characterised in that**
each charge air cooler (17, 25, 50) is separately assigned one such cooler bypass (27).

9. Internal combustion engine according to any of claims 1 to 7,
**characterised in that**
at least two of the charge air coolers (17, 25, 50) are jointly assigned one such radiator bypass (27).

10. Vehicle (1) comprising a supercharged internal combustion engine (2), a fresh air system (3) and a cooling circuit (9), according to any of claims 1 to 9.

## Revendications

1. Moteur à combustion interne (2) suralimenté, de préférence dans un véhicule (1),
- avec un circuit de refroidissement (9), dans lequel un fluide de refroidissement circule et qui comporte un compresseur de circuit de refroidissement (10) destiné à entraîner le fluide de refroidissement et un premier évaporateur (15) destiné à l'évaporation du fluide de refroidissement,
- avec une installation d'air frais (3) qui est destinée à amener de l'air frais au moteur à combustion interne (2) et dans laquelle un compresseur (5) est agencé,
- dans lequel l'installation d'air frais (3) comporte un premier refroidisseur d'air de suralimentation (17) destiné à refroidir l'air de suralimentation produit par le compresseur (5),
- dans lequel l'installation d'air frais (3) comporte au moins un autre refroidisseur d'air de suralimentation (25, 50) destiné à refroidir l'air de suralimentation,
- avec un circuit de refroidissement d'air de suralimentation (22) destiné à refroidir l'air de suralimentation et comportant un deuxième refroidisseur d'air de suralimentation (25) de l'installation d'air frais (3), un fluide de refroidissement circulant alors dans le circuit de refroidissement d'air de suralimentation (22),
- dans lequel l'installation d'air frais (3) comporte au moins une dérivation de refroidisseur (27) destinée à contourner au moins l'un des refroidisseurs d'air de suralimentation (17, 25, 50),
**caractérisé en ce que**
- le moteur à combustion interne (2) comporte un circuit intermédiaire (18) dans lequel un fluide intermédiaire circule et dans lequel le premier évaporateur (15) et le premier refroidisseur d'air de suralimentation (17) sont intégrés de manière à transmettre de la chaleur,
- le circuit intermédiaire (18) est séparé, du point de vue des fluides, du circuit de refroidissement (9) et de l'installation d'air frais (3) ainsi que du circuit de refroidissement d'air de suralimentation (22).

2. Moteur à combustion interne selon la revendication 1, **caractérisé en ce que** le moteur à combustion interne (2) comporte un circuit de refroidissement de moteur (30) qui est destiné à refroidir le moteur à combustion interne (2) et dans lequel un fluide de refroidissement de moteur circule, un troisième refroidisseur d'air de suralimentation (50) de l'installation d'air frais (3) étant intégré dans le circuit de refroidissement de moteur (30) afin de refroidir l'air de suralimentation.

3. Moteur à combustion interne selon la revendication 1 ou 2, **caractérisé en ce que** le troisième refroidisseur d'air de suralimentation (50) est agencé dans l'installation d'air frais (3) en amont du deuxième refroidisseur d'air de suralimentation (25).

4. Moteur à combustion interne selon l'une des revendications 1 à 3, **caractérisé en ce que** les autres refroidisseurs d'air de suralimentation (25, 50) sont agencés dans l'installation d'air frais (3) en amont du premier refroidisseur d'air de suralimentation (17).

5. Moteur à combustion interne selon l'une des revendications 1 à 4, **caractérisé par** au moins un dispositif de soupape de dérivation (28) destiné à dévier, de manière pouvant être commandée, l'air de suralimentation par au moins une dérivation de refroidisseur (27) de ce type.

6. Moteur à combustion interne selon la revendication 5, **caractérisé en ce qu'**au moins un dispositif de soupape de dérivation (28) de ce type peut être réglé par degrés.

7. Moteur à combustion interne selon la revendication 5 ou 6, **caractérisé en ce qu'**au moins un dispositif de soupape de dérivation (28) de ce type peut être réglé de façon continue.

8. Moteur à combustion interne selon l'une des revendications 1 à 7, **caractérisé en ce qu'**une dérivation de refroidisseur (27) de ce type est associée séparément à chaque refroidisseur d'air de suralimentation (17, 25, 50).

9. Moteur à combustion interne selon l'une des revendications 1 à 7, **caractérisé en ce qu'**une dérivation de refroidisseur (27) de ce type est associée en commun au moins à deux des refroidisseurs d'air de suralimentation (17, 25, 50).

10. Véhicule (1) avec un moteur à combustion interne (2) suralimenté, avec une installation d'air frais (3) et avec un circuit de refroidissement (9), selon l'une des revendications 1 à 9.
